# EUROPÄISCHE PATENTANMELDUNG

(11) **EP 0 586 736 A1**
(43) Veröffentlichungstag der Anmeldung: **16.03.1994**
(21) Anmeldenummer: 92115519.8
(22) Anmeldetag: 10.09.1992
(51) Int. Cl.: B01D 53/36

(54) **Einrichtung zur Abgasreinigung**

(71) Anmelder: H KRANTZ-TKT GmbH, D-51465 Bergisch Gladbach (DE)
(72) Erfinder: Berner, Gerhard, Dipl.-Ing., W-8521 Hessdorf Hannberg (DE); Pröbstle, Günther, Dr., W-8520 Erlangen (DE); Müller, Raimund, Dr., W-8620 Lichtenfels (DE)
(74) Vertreter: Bauer, Hubert, Dipl.-Ing.

(57) **Zusammenfassung**

Einrichtungen zur Abgasreinigung, in denen Schadstoffe im Abgas, beispielsweise auf katalytischem Wege umgesetzt oder adsorbiert werden, müssen im allgemeinen für jede Anlage individuell geplant und aufgebaut werden, was einen relativ hohen Konstruktions- und Investitionsaufwand erforderlich macht und einer relativ schnellen Verfügbarkeit der Einrichtung entgegensteht.

Zur Behebung dieser Nachteile ist erfindungsgemäß vorgesehen, daß die Einrichtung zur Abgasreinigung modulweise aufgebaut ist und mindestens ein Abgasumlenkmodul (16), mindestens ein Reaktionsmodul (2), in dem das Abgas mit einem eine Reaktion induzierenden Material kontaktierbar ist, mindestens ein Abgasadaptermodul (34) sowie mindestens ein Abgasleitungsmodul (12) umfaßt. Hierdurch ist die gesamte Einrichtung nach dem Prinzip eines Baukastens aus vorgefertigten Modulen zusammensetzbar, was die Planungsphase verkürzt, dem Investitionsaufwand und das Bauvolumen verringert und die Verfügbarkeit der Einrichtung steigert.

Die erfindungsgemäß modulweise aufgebaute Einrichtung zur Abgasreinigung ist prinzipiell in jede Abgasleitung einbaubar.

## Beschreibung

Die Erfindung bezieht sich auf eine Einrichtung zur Abgasreinigung mit einem eine Reaktion induzierenden Material. Die dabei induzierte Reaktion kann beispielsweise eine katalytische und/oder eine Redox-Reaktion und/oder ein physikalischer Prozeß, wie beispielsweise die Adsorption, sein.

Zur Reinigung von Abgas sind eine Vielzahl von Einrichtungen bekannt. Zur Entfernung von Schwefeldioxid sowie von Dioxinen und Furanen aus einem Abgas ist es bekannt, dieses Abgas durch eine Adsorbereinrichtung zu leiten, wobei das Schwefeldioxid sowie die Dioxine und Furane an einem Material hoher Adsorptionsfähigkeit adsorbiert werden. Desweiteren ist es bekannt, Schadstoffe im Abgas, wie z.B. Kohlenwasserstoffe und Kohlenmonoxid, an einem Oxidationskatalysator katalytisch zu Kohlendioxid und Wasser umzusetzen und diese auf diese Weise aus dem Abgas zu entfernen. Außerdem ist es bekannt, die in einem Rauchgas enthaltenen Stickoxide - an einem sogenannten Denox-Katalysator bei gleichzeitiger Anwesenheit von Ammoniak - katalytisch zu Stickstoff und Wasser umzusetzen.

Die genannten Einrichtungen zur Abgasreinigung (Adsorbereinrichtung, Oxidationskatalysator, Denox-Katalysator) haben den Nachteil, daß praktisch für jede Neuinstallation einer solchen Einrichtung in eine Abgasleitung einer industriellen Anlage ein relativ hoher Aufwand bezüglich der Planung, der Konstruktion, der Genehmigung und der Installation derselben erforderlich ist.

Ein weiterer Nachteil bekannter Einrichtungen zur Abgasreinigung ist der häufig zu hohe Druckabfall. Hierzu sind aus der DE 35 06 940 eine Vorrichtung und ein Verfahren zur Entfernung unerwünschter gasförmiger Bestandteile aus einem Rauchgas, hier die katalytische Umwandlung von Stickoxiden, bekannt, die es erlauben, infolge einer treppenförmigen Anordnung eines geeigneten Katalysators den Druckabfall in der Leitung für das Rauchgas zu minimieren. In bevorzugter Weise sind hierbei Wärmetauscher und Regeneratoren und der Katalysator in einem gemeinsamen Behälter angeordnet. Dieser Behälter muß praktisch für jede Anlage, in der sein Einbau vorgesehen ist, individuell geplant, konstruiert, genehmigt und aufgebaut werden. Diese Tatsache macht einen relativ hohen Aufwand an Investitionskosten erforderlich und steht im allgemeinen einer raschen Verfügbarkeit entgegen.

Der Erfindung liegt daher die Aufgabe zugrunde, eine Einrichtung zur Abgasreinigung, anzugeben, die es erlaubt, Schadstoffe aus einem Abgas mit hinreichend hohen Abscheidegraden zu entfernen und dabei den Investitionsaufwand und das Bauvolumen zu minimieren sowie die Verfügbarkeit zu steigern, d.h. die Zeitdauer zwischen Planungsbeginn und Inbetriebnahme der Einrichtung zu verkürzen. Außerdem ist es wünschenswert, eine möglichst gute Gleichverteilung der Abgasströmung beim Durchströmen der Einrichtung und einen möglichst geringen Druckabfall in der Abgasleitung zu erreichen.

Diese Aufgabe wird erfindungsgemäß dadurch gelöst, daß die Einrichtung zur Abgasreinigung modulweise aufgebaut ist und mindestens ein Abgasumlenkmodul, mindestens ein Reaktionsmodul, in dem das Abgas mit einem eine Reaktion induzierenden Material kontaktierbar ist, mindestens ein Abgasadaptermodul sowie mindestens ein Abgasleitungsmodul umfaßt. Hierdurch wird erreicht, daß die gesamte Einrichtung aus bereits fertigen bevorratbaren Modulen nach dem Baukastenprinzip individuell an die entsprechende Anlage, an das entsprechende Abgas und an die entsprechenden Abgasvolumenströme anpaßbar ist. Hierdurch kann bei der Anschaffung einer auf dieser Modulbasis aufgebauten Einrichtung auf die bisher notwendige Neukonstruktion praktisch eine nur für eine bestimmte Anlage gefertigten Prototyps verzichtet werden. Die modulweise aufgebaute Einrichtung zur Abgasreinigung wird dabei durch eine bloße Anpassung des Leitungsquerschnitts einer möglicherweise bereits bestehenden Abgasleitung und der Abgasleitungsmodule mittels des Abgasadaptermoduls in eine möglicherweise bestehende Abgasleitung einfügbar. Hierbei muß das Abgasadaptermodul als einziges Bauteil zu diesem Zweck individuell hergestellt werden.

In vorteilhafter Ausgestaltung der Erfindung kann vorgesehen sein, daß das Reaktionsmodul scheibenförmig, insbesondere vorzugsweise quaderförmig, ausgestaltet ist und daß das eine Reaktion induzierende Material im wesentlichen parallel zur Grundfläche der Scheibe angeordnet ist, wobei beiderseits des Materials jeweils ein Gasraum vorgesehen ist, durch den das Abgas dem Material zuströmt bzw. von diesem wegströmt. Hierdurch ist es möglich, den Durchströmquerschnitt für das Abgas im Reaktionsmodul zu vergrößern sowie eine einfache Lagerung des eine Reaktion induzierenden Materials in demselben zu erreichen.

Hierbei ist es besonders vorteilhaft, wenn die beiderseits des eine Reaktion induzierenden Materials befindlichen Gasräume senkrecht zur Scheibenebene des Reaktionsmoduls auf gegenüberliegenden Seiten offen sind. Hierdurch können mehrere Reaktionsmodule übereinander gestapelt werden, weil das Abgas auf diese Weise auf der einen Seite in die Reaktionsmodule einströmt und auch auf der anderen Seite aus ihnen hinausströmt.

Ausführungsbeispiele der Erfindung werden anhand der Zeichnung näher erläutert. Dabei zeigen:
- Figur 1: eine schaubildliche Darstellung eines erfindungsgemäßen quaderförmigen Reaktionsmoduls;
- Figur 2: eine schaubildliche Darstellung eines erfindungsgemäßen quaderförmigen Abgasleitungsmoduls;
- Figur 3: ein erfindungsgemäßes quaderförmiges Abgasumlenkmodul;
- Figur 4: ein erfindungsgemäßes quaderförmiges Abgaseckmodul;
- Figur 5: eine erfindungsgemäße Einrichtung zur Abgasreinigung.

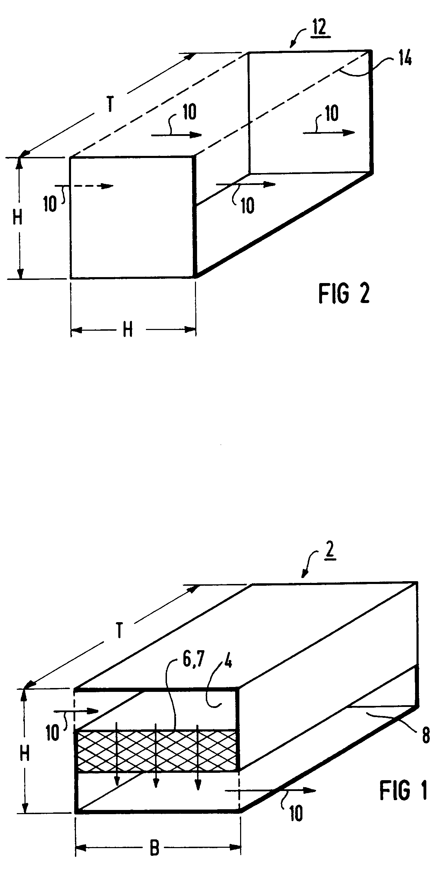

Das in Figur 1 gezeigte Reaktionsmodul 2 ist für einen Abgasvolumenstrom von etwa 5000 Nm³/h Abgas ausgelegt. Es hat vorzugsweise eine Breite B von 1 m, eine Höhe H von 0,75 m und eine Tiefe T von 2 m. Das quaderförmige Reaktionsmodul 2 ist in drei ebenfalls quaderförmige Unterräume aufgeteilt, und zwar in einen in der zeichnerischen Darstellung oberen Gasraum 4, einen Reaktionsraum 6 und einen in der zeichnerischen Darstellung unteren Gasraum 8. Die Stirnflächen und die Boden- und Deckfläche des Reaktionsmoduls 2 bestehen aus Blechen aus einem nichtrostenden und/oder hitzebeständigen Stahl. Hierbei ist die vordere Stirnfläche so ausgebildet, daß ein (nicht weiter dargestellter) Schubkasten 7, auf hier nicht weiter dargestellten Führungsmitteln aus dem Reaktionsmodul 2 herausziehbar und auch wieder hineinschiebbar ist. In den Schubkasten 7 ist ein eine Reaktion induzierendes Material eingefüllt und füllt den Reaktionsraum in eingeschobenem Zustand vollständig aus. Die Seitenflächen des Reaktionsmoduls 2 sind derart ausgestaltet, daß das zu reinigende Abgas 10 seitlich in den oberen Gasraum 4 einströmt, den Reaktionsraum 6 hier von oben nach unten durchströmt und dabei mit dem eine Reaktion induzierenden Material kontaktiert wird und auf der zur Einströmseite des oberen Gasraums 4 gegenüberliegenden Seite den unteren Gasraum 8 verläßt. Unter diesen Umständen wird ein mittlerer Abgasdurchsatz von etwa 70 Nml/cm²/sec im Reaktionsraum 6 erreicht.

Das in Figur 2 dargestellte, quaderförmige Abgasleitungsmodul 12 besitzt die Höhe und Breite H sowie die Tiefe T des Reaktionsmoduls 2. Auf einen Rahmen 14 (zum Teil gestrichelt dargestellt) sind bei dem Abgasleitungsmodul 12 nur die hier quadratischen Stirnflächen und die Bodenfläche mit jeweils einem Blech aus nichtrostendem und/oder hitzebeständigem Stahl verschlossen.

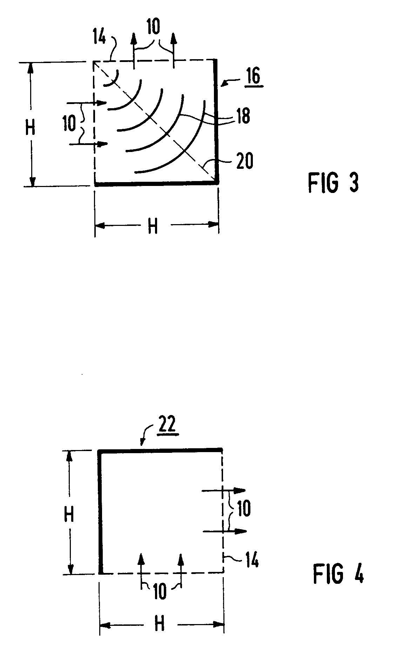

Das in Figur 3 in Ansicht auf die vordere Stirnfläche dargestellte Abgasumlenkmodul 16 umfaßt wieder den aus Fig. 2 bekannten quaderförmigen Rahmen 14 derselben Abmessungen. In diesem Rahmen 14 sind die quadratischen Stirnflächen, die Deckfläche und eine Seitenfläche mit jeweils einem Blech aus nichtrostendem und/oder hitzebeständigem Stahl gasdicht verkleidet. Die Grundfläche sowie die andere Seitenfläche des Abgasumlenkmoduls 16 bleibt offen. In das Abgasumlenkmodul 16 sind darüber hinaus Abgasumlenkbleche 18 eingebaut, die achssymmetrisch zu einer eingestrichelten Diagonalen 20 innerhalb des Abgasumlenkmoduls 16 angeordnet sind. Mittels der Abgasumlenkbleche 18 wird die Strömungsrichtung des durch die offene Grundfläche des Abgasumlenkmoduls 16 einströmende Abgas 10 um 90° zur rechten offenen Seitenfläche des Abgasumlenkmoduls 16 hin umgelenkt.

Das in Figur 4 in Ansicht auf die vordere Stirnfläche dargestellte Abgaseckmodul 22 besteht wieder aus dem quaderförmigen Rahmen 14 mit der Höhe und der Breite H sowie der Tiefe T. Das Abgaseckmodul 22 besitzt außerdem denselben äußeren Aufbau wie das Abgasumlenkmodul 16, unterscheidet sich von diesem aber durch die fehlenden Abgasumlenkbleche 18.

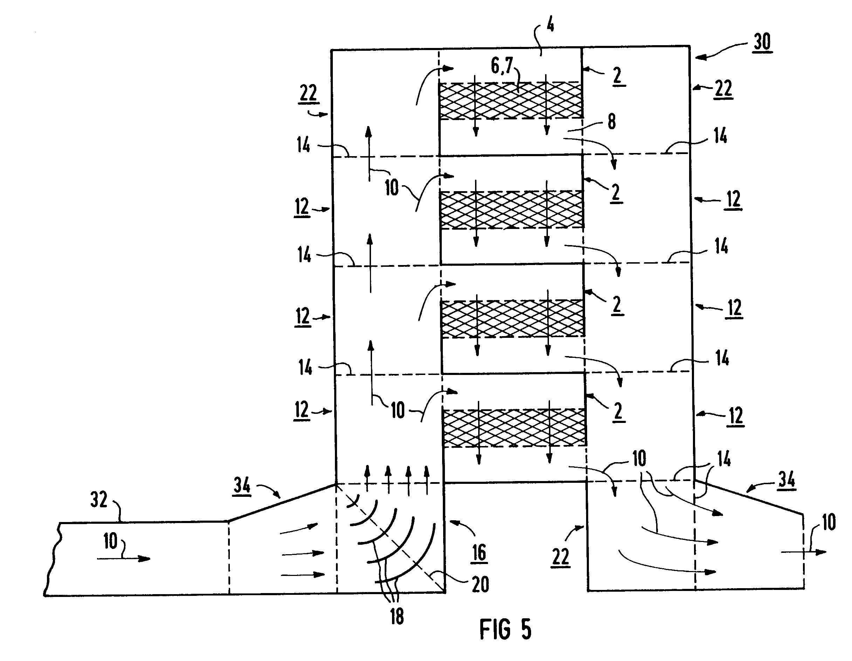

Die in Figur 5 im Querschnitt dargestellte Einrichtung 30 zur Abgasreinigung ist in einer Abgasleitung 32 beispielsweise einer hier nicht weiter dargestellten Abluftanlage einer Druckerei eingebaut. Das mittels der Abluftsanlage aus der Druckerei geförderte Abgas (Abluft) ist mit Lösungsmitteldämpfen, wie z.B. Alkoholen, Waschbenzin, Styrol und Toluol, beladen. Der Volumenstrom des Abgases 10 durch die Abgasleitung 32 beträgt etwa 20000 Nm³/h. Die Abgasleitung 32 weist einen kreisrunden Querschnitt mit einem Durchmesser von 0,7 m auf.

Die Einrichtung 30 zur Abgasreinigung ist modulweise aus den in Fig. 1 - 4 dargestellten Modulen, und zwar aus vier Reaktionsmodulen 2, sechs Abgasleitungsmodulen 12, einem Abgasumlenkmodul 16 und drei Abgaseckmodulen 22 sowie zwei individuell an die Abgasleitung 32 angepaßten Abgasadaptermodulen 34 aufgebaut. Die Abgasadaptermodule 34 ändern hierbei den kreisrunden Leitungsquerschnitt der Abgasleitung 32 in den rechteckigen Querschnitt des Abgasumlenkmoduls 16 sowie des Abgaseckmoduls 22. Die gesamte Einrichtung 30 inklusive der Abgasadaptermodule 34 besitzt im Ausführungsbeispiel eine Gesamtbreite von etwa 4 m, eine Gesamthöhe von etwa 3,75 m und eine Tiefe von etwa 2 m.

Beim Betrieb der Einrichtung 30 zur Gasreinigung strömt das schadstoffbeladene Abgas 10 zunächst durch die Abgasleitung 32 und das Abgasadaptermodul 34 in das Abgasumlenkmodul 16. Aufgrund der im Abgasstrom angeordneten Umlenkbleche 18 weist das Abgas beim Austritt aus dem Abgasumlenkmodul 16 über den gesamten Strömungsquerschnitt eine relativ gleichmäßige Geschwindigkeitsverteilung (Abweichung etwa 10% von v) auf. Diese Gleichverteilung der Abgasströmung ist notwendige Voraussetzung dafür, daß in jedes Reaktionsmodul 2 etwa die gleiche Menge an Abgas einströmt.

Der Reaktionsraum jedes Reaktionsmoduls 2 ist in diesem Ausführungsbeispiel mit einer Schüttung von (nicht weiter dargestellten) Katalysatorpellets gefüllt. Dabei werden die Katalysatorpellets in den Schubkasten 7 eingefüllt, der im eingeschobenen Zustand den gesamten Reaktionsraum 6 ausfüllt. Die Katalysatorpellets haben im Ausführungsbeispiel eine Länge von etwa 10 mm und einen Durchmesser von etwa 5 mm. Neben anderen Substanzen enthalten die Katalysatorpellets als katalytisch aktive Substanz eine Mischoxidphase, die aus Titandioxid TiO₂, Dichromtrioxid Cr₂O₃ und Kupferoxid CuO gebildet wird.

Durch Kontaktierung der genannten Schadstoffe (Lösungsmitteldämpfe) an den Katalysatorpellets bei gleichzeitiger Anwesenheit von Sauerstoff im Abgas 10 werden diese Schadstoffe katalytisch zu Kohlendioxid und Wasser umgesetzt. Nach der Kontaktierung mit den Katalysatorpellets strömt das Abgas auf der der Einströmseite gegenüberliegenden Seite der Reaktionsmodule 2 in die Abgasleitungsmodule 12 und das Abgaseckmodul und wird von dort über das Abgasadaptermodul 34 ins Freie entlassen.

Infolge des modulweisen Aufbaues der Einrichtung 30 stellt das Abgasadaptermodul 34 das einzige Bauteil dar, das noch individuell entsprechend den Abmessungen der vorliegenden Abgasleitung 32 gefertigt werden muß. Für alle anderen Teile der Einrichtung 30 ist eine individuelle Auslegung der einzelnen Teile der Einrichtung nun nicht mehr erforderlich. Die Anlage 30 ist - wie in Figur 5 dargestellt - aus den fertigen Modulen der Figuren 1 - 4 sowie der Abgasadaptermodule 34 nach dem Baukastenprinzip zusammengesetzt, wobei die Anzahl der verwendeten Reaktionsmodule 2 und Abgasmodule 12 abhängig von der Abgasmenge wählbar ist. Zur Beseitigung verschiedenster Schadstoffe im Abgas ist daher individuell für jeden Fall eine geeignete Füllung der Schubkästen 7, die die Reaktionsräume 6 des Reaktionsmoduls 2 ausfüllen, wählbar.

Eine strömungsgünstige Anordnung der in den Figuren 1 bis 4 dargestellten Module ergibt sich auch, wenn das Abgas im Gegensatz zum in Figur 5 gezeigten Fall zunächst unter dem Reaktionsmodul 2 durchströmt und unter zweimaliger 90°-Ablenkung, hier gegen den Uhrzeigersinn, oberhalb der Reaktionsräume 6 in die Reaktionsmodule 2 eintritt.

Beispielsweise ist die Einrichtung 30 auch durch geringe Modifikationen gegenüber der in Figur 5 dargestellten Ausführungsform auch zur Reinigung eines stickoxidhaltigen Abgases geeignet. In diesem Fall ist zusätzlich zu der in Figur 5 gezeigten Einrichtung 30 eine hier nicht weiter dargestellte Eindüsvorrichtung für ein Reaktionsmittel, wie z.B. Ammoniak, beispielsweise am Eintrittsort des Abgases in das Abgasadaptermodul 34 vorzusehen. Weiterhin ist das Katalysatormaterial gemäß dem Ausführungsbeispiel in Figur 5 gegen geeignetes Denox-Material auszutauschen. Hierfür eignen sich beispielsweise Katalysatorpellets derselben Abmessungen, die auf der Basis von Titandioxid (TiO₂) und mit einem oder mehreren der katalytisch aktiven Zusätze Wolframtrioxid (WO₃), Molybdäntioxid (MoO₃) und Vanadinpentoxid (V₂O₅) hergestellt sind. Zur katalytischen Umsetzung der Stickoxide mit Ammoniak zu Stickstoff und Wasser wird das Abgas in den Reaktionsräumen 6 der Reaktionsmodule 10 mit den Katalysatorpellets kontaktiert.

Ebenso kann die Einrichtung 30 in hier nicht weiter dargestellter Weise auch als Adsorbereinrichtung zur Reinigung von Abgas, das halogenierte Kohlenwasserstoffe enthält, eingesetzt werden. In diesem Fall ist gegenüber der in Figur 5 dargestellten Einrichtung 30 nur das Katalysatormaterial in den Schubkästen 7 der Reaktionsräume 6 der Reaktionsmodule 2 gegen Adsorbermaterial, wie z.B. Aktivkohle oder Herdofenkoks, auszutauschen.

Infolge des modulweisen Aufbaues wird für die genannten Fälle der Investitionsaufwand und das Bauvolumen minimiert, hierdurch die Verfügbarkeit einer solchen Einrichtung gesteigert sowie eine Strömungsgleichverteilung des Abgases über die gesamte Anzahl der Reaktionsmodule erreicht. Außerdem wird infolge des zur Verfügung stehenden Querschnitts in dem Reaktionsmodul der Druckabfall in der Abgasleitung relativ niedrig gehalten. Darüber hinaus kann der Druckabfall bei geebenem Abgasstrom durch die Hinzufügung weiterer Reaktionsmodule in weiten Grenzen verringert werden.

## Patentansprüche

1. Einrichtung zur Abgasreinigung, die modulweise aufgebaut ist und mindestens ein Abgasumlenkmodul (16), mindestens ein Reaktionsmodul (2), in dem das Abgas mit einem eine Reaktion induzierenden Material kontaktierbar ist, mindestens ein Abgasadaptermodul (34) sowie mindestens ein Abgasleitungsmodul (12) umfaßt.

2. Einrichtung nach Anspruch 1, **dadurch gekennzeichnet,** daß das Reaktionsmodul (2) scheibenförmig ausgestaltet ist und daß das eine Reaktion induzierende Material im wesentlichen parallel zur Grundfläche der Scheibe angeordnet ist, wobei beiderseits des Materials jeweils ein Gasraum (4, 8) vorgesehen ist, durch den das Abgas (10) dem Material zuströmt bzw. von diesem wegströmt.

3. Einrichtung nach Anspruch 2, **dadurch gekennzeichnet,** daß die beiderseits des eine Reaktion induzierenden Materials befindlichen Gasräume (4, 8) senkrecht zur Scheibenebene auf gegenüberliegenden Seiten offen sind.

4. Einrichtung nach Anspruch 2 oder 3, **dadurch gekennzeichnet,** daß das Reaktionsmodul (2) als Quader ausgebildet ist.

5. Einrichtung nach einem der Ansprüche 2 bis 4, **dadurch gekennzeichnet,** daß das eine Reaktion induzierende Material in einen Schubkasten (7) einfüllbar ist, wobei der Schubkasten (7) im in das Reaktionsmodul (2) eingeschobenen Zustand den gesamten Raktionsraum (6) des Reaktionsmoduls (2) ausfüllt.

6. Einrichtung nach einem der Ansprüche 1 bis 5, **dadurch gekennzeichnet,** daß das eine Reaktion induzierende Material als solches in Form einer Schüttung vorgesehen ist.

7. Einrichtung nach einem der Ansprüche 1 bis 5, **dadurch gekennzeichnet,** daß das eine Reaktion induzierende Material als solches in strukturierter Form (Wabe, Platte) vorgesehen ist.

8. Einrichtung nach einem der Ansprüche 1 bis 7, **dadurch gekennzeichnet,** daß das eine Reaktion induzierende Material katalytisch aktives Material ist.

9. Einrichtung nach Anspruch 8, **dadurch gekennzeichnet,** daß das katalytisch aktive Material zur Oxidation von im Abgas (10) enthaltenen organischen Verbindungen eine oder mehrere der Komponenten Titandioxid (TiO₂), Dichromtrioxid (Cr₂O₃) und Kupferoxid (CuO) umfaßt.

10. Einrichtung nach Anspruch 9, **dadurch gekennzeichnet,** daß das katalytisch aktive Material eine Mischoxidphase, gebildet aus den Ausgangsmaterialien Titandioxid, Dichromtrioxid und Kupferoxid, umfaßt.

11. Einrichtung nach Anspruch 8, **dadurch gekennzeichnet,** daß die Einrichtung beim Einsatz zur Reduktion von im Abgas (10) enthaltenen Stickoxiden ein Abgasleitungsmodul (12) mit einer Ammoniakeindüsvorrichtung umfaßt und daß katalytisch aktives Material im wesentlichen aus Titandioxid mit einem oder mehreren der Zusätze Molybdäntrioxid (MoO₃), Wolframtrioxid (WO₃) und Vanadinpentoxid (V₂O₅) besteht.

12. Einrichtung nach einen der Ansprüche 1 bis 7, **dadurch gekennzeichnet,** daß das eine Reaktion induzierende Material eine Substanz hoher Adsorptionsfähigkeit umfaßt.
